# EUROPEAN PATENT SPECIFICATION

(11) **EP 0 458 975 B1**
(45) Date of publication and mention of the grant of the patent: **07.05.1997**
(21) Application number: 91900322.8
(22) Date of filing: 17.12.1990
(51) Int. Cl.: G11B 7/125

(54) **OPTICAL RECORDING APPARATUS**
OPTISCHES AUFZEICHNUNGSGERÄT
APPAREIL D'ENREGISTREMENT OPTIQUE

(30) Priority: 20.12.1989 JP 330838/89
(43) Date of publication of application: 04.12.1991
(60) Divisional application: 95107275.0
(73) Proprietor: SONY CORPORATION, Tokyo 141 (JP)
(72) Inventor: UDAGAWA, Toshiki, Shinagawa-ku Tokyo 141 (JP); YOSHIMURA, Shunji, Shinagawa-ku Tokyo 141 (JP); OHTA, Masumi, Shinagawa-ku Tokyo 141 (JP)
(74) Representative: Müller, Frithjof E., Dipl.-Ing.
(86) International application number: JP9001641
(87) International publication number: WO9109400

(56) References cited:
- EP-A- 0 335 486
- JP-A- 1 185 839
- JP-A- 6 339 138
- JP-A-59 117 743
- PATENT ABSTRACTS OF JAPAN vol. 8, no. 117 (P-277)(1554) 31 May 1984 & JP-A-59 024 452

## Description

### TECHNICAL FIELD

The present invention relates to an optical recording apparatus capable of performing a high-density recording by removing the influence of remaining heat of a recording medium due to a preceding laser light pulse radiated thereon.

### BACKGROUND ART

Conventionally, it has been known an optical recording apparatus wherein a recording medium is heated by using energy of a laser light beam to change magneto-optical characteristics thereof to thereby record data thereon.

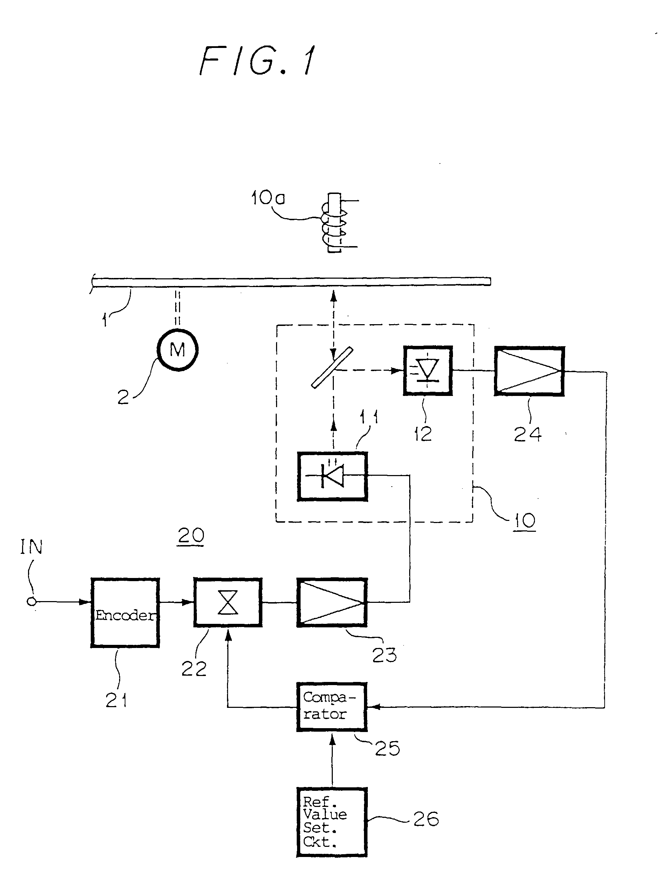

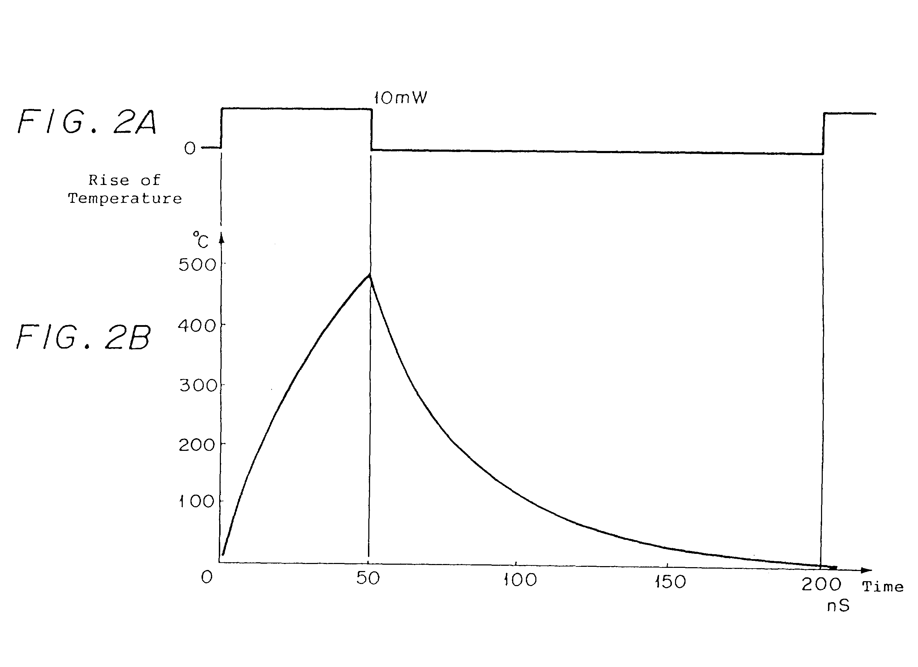

At first, a conventional optical recording apparatus will be explained with reference to Figs. 1 and 2.

An example of the construction of the conventional optical recording apparatus is shown in Fig. 1. For simplifying the explanation, the explanation of various types of servo control circuits will be omitted in this conventional example of Fig. 1.

Referring now to Fig. 1, reference numeral 1 denotes a magneto-optical disc acting as an optical disc which is capable of rewriting data and rotated at a constant angular velocity or a constant linear velocity by a spindle motor 2. Reference numeral 10 denotes an optical head having a laser diode 11 and a photo diode 12 for writing data to (or reading data from) the magneto-optical disc 1. A magnetic head 10a acting as an external magnetic field supplying apparatus is disposed in opposite to the optical head 10 through the magneto-optical disc 1 in a manner that the magnetic head and the optical head sandwich the magneto-optical disc 1 in an opposite manner.

In this construction, magnetizing direction of a part of a vertical magnetic recording film of the magneto-optical disc 1 where a laser light beam from the optical head 10 is radiated is changed in accordance with a direction of external magnetic field supplied from the magnetic head 10a.

Reference numeral 20 denotes a recording circuit system, wherein digital data as an information signal to be recorded on the magneto-optical disc 1 is supplied to an encoder 21 through an input terminal IN and converted not only into a predetermined format but also into a recording signal accorded with a modulation method such as a pulse position modulation, for example, by the encoder 21. The output of the encoder 21 is supplied to a light intensity modulation circuit 22 which in turn delivers an output signal to the laser diode 11 through a driving amplifier 23 to thereby intermittently control an intensity of radiated light from the diode.

A part of the laser light beam radiated from the laser diode 11 is reflected by a prism mirror and detected by the photo diode 12. The detected output of the photo diode 12 is supplied to a comparator 25 through an amplifier 24 and compared therein with a reference value applied from a reference value setting circuit 26. The output from the comparator 25 is fed back to the light intensity modulation circuit 22 to control the light intensity (power level) of the laser diode 11 at a constant value, thereby performing a so-called automatic power control (APC).

Now, with reference to Fig. 2, a method of forming a recording area (mark) in the conventional optical recording apparatus will be explained.

When a recording linear velocity of the magneto-optical disc 1 is 10 m/s, for example, a laser light with a power level of 10 mW and a pulse width of 50 nS, for example, is radiated from the diode 11 as shown in Fig. 2A, a temperature of a recording layer of the magneto-optical disc 1 increases and then decreases as shown in Fig. 2B, so that a mark with a length twice as large as the pulse width of the radiated laser beam, that is, a time length of 100 nS is recorded in the recording layer with a Curie point Tc of 180°C, for example, illustration thereof being omitted. In this case, the temperature of the recording layer corresponds to the center of radiation of the laser light beam whose energy density is accorded with Gausian distribution and is influenced also by thermal diffusion in the recording layer.

In the above-described example, as clear from Fig. 2B, at a time point where a time period corresponding to a beam radiation length twice as large as the mark length, that is, 200 nS has lapsed after initial start of the radiation of the laser light beam, the temperature of the recording layer of the magneto-optical disc 1 has decreased to a value almost same as that before the beam radiation thereon, so that a succeeding mark can be formed without being influenced by the remaining heat generated when forming the preceding mark. Thus, the modulation method such as the pulse position modulation can be employed without any difficulty.

By the way, in order to perform a high-density recording, it has been proposed to set a recording linear velocity same as that of the above-described example and set a time interval of radiation of the laser light beam half of that of the above-described example, for example, that is 100 nS,. thereby forming a mark with a time length of half of the radiation time interval, that is, 50 nS.

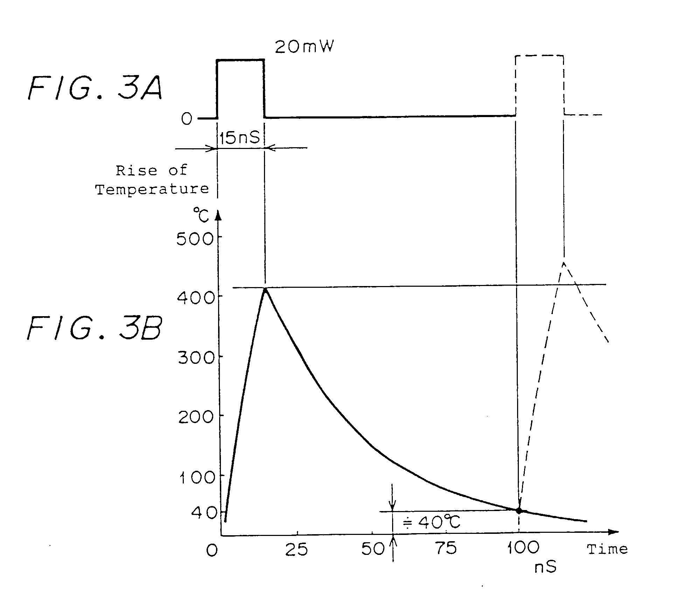

In this case, as known by JP-A-58-212628 filed by the same applicant as the present application and so on, for example, due to the influence by the thermal diffusion of the recording layer, it is required to reduce a pulse width of the radiated laser light beam and to increase a power level thereof when compared with the above-described example. Namely, a laser light with a pulse width of 15 nS and a power level of 20 mW, for example, is radiated from the diode 11 as shown in Fig. 3A to thereby increase and then decrease a temperature of the recording layer of the magneto-optical disc 1 as shown in Fig. 3B to form a mark with a predetermined time length, that is, 50 nS can be formed.

In this case, however, as clear form Fig. 3B, at a time point where a time period corresponding to a beam radiation length twice as large as the mark length, that is, 100 nS has lapsed after initial start of the radiation of the laser light beam, a time period lapsed after termination of the laser beam radiation is such a shorter value as almost half of that of the above-described example, so that a temperature of the recording layer of the magneto-optical disc 1 merely decreases to a value higher by about 40°C than a temperature at the initiation of the laser beam radiation.

This residual temperature increase, that is, remaining heat generated when forming the preceding mark is added to the temperature increase of the recording layer when forming a succeeding mark as shown by a dotted line in Fig. 3B, so that a time period required to reach to Curie point Tc in the recording layer is made shorter in a temperature rising mode and a time period required to reach to Curie point Tc in the recording layer is made longer in a temperature falling mode. Thus, front and rear edges of a mark to be formed are shifted to a former and a rear side from predetermined positions respectively and so a desired mark can not be formed accurately, whereby there was such a problem that an error occurs in data reproduced from the marks in the modulation method of the pulse position modulation type.

A solution of this problem is proposed in the EP-A-0 289 260. Here the radiation time of a laser beam is controlled in respect to the leading edge and the trailing edge of the pulse to be recorded to enable a mark to be formed at a correct position with a correct length. This control of the radiation time is made in relation with detecting means which detects the length of the interval between the signal pulse to be recorded and the preceding signal pulse.

A known optical recording apparatus (JP 63-39138 A) controls the laser power. The amplitude of the laser driving signal pulse is decreased by a value dependent from an integration process of the preceding pulses. Then the result is recorded. Thus the level and the peak shift of the reproduced waveform is considerably decreased.

### DISCLOSURE OF INVENTION

Accordingly, it is an object of the present invention to provide an optical recording apparatus which is capable of recording a high-density pulse signal accurately on a recording medium by cancelling influence of remaining heat of the recording medium due to a laser light pulse corresponding to a preceding pulse signal.

To this end, an optical recording apparatus according to the present invention is constructed in a manner that, in an optical recording apparatus wherein a modulation signal based on recording data is supplied to a light intensity modulation circuit 22 for a laser light source 11 and a light beam from the laser light source thus modulated is radiated on an optical recording medium 1 to record data thereon, pattern detecting means 31 for detecting a pulse pattern of the modulation signal is provided, and when the pattern detecting means detects a signal pulse with an interval smaller than a predetermined value, an amplitude of a signal pulse succeeding to the pulse is decreased by a stored constant correction value.

The invention is defined in claim 1, a preferred embodiment thereof is defined in claim 2.

Thus, according to the present invention, influence of remaining heat of the recording medium due to a laser light pulse corresponding to a preceding signal pulse is cancelled to thereby record a high-density pulse signal accurately on a recording medium.

### BRIEF DESCRIPTION OF DRAWINGS

- Fig. 1: is a block diagram illustrating the construction of an example of a conventional optical recording apparatus,
- Fig. 2: is a timing chart for explaining operation of the conventional optical recording apparatus,
- Fig. 3: is a timing chart for explaining the present invention,
- Fig. 4: is a block diagram illustrating the construction of an embodiment of an optical recording apparatus according to the present invention,
- Fig. 5: is a timing chart for explaining operations of the embodiment of the present invention, and
- Fig. 6: is a graph for explaining the change in temperature of a recording medium.

### BEST MODE FOR CARRYING OUT THE INVENTION

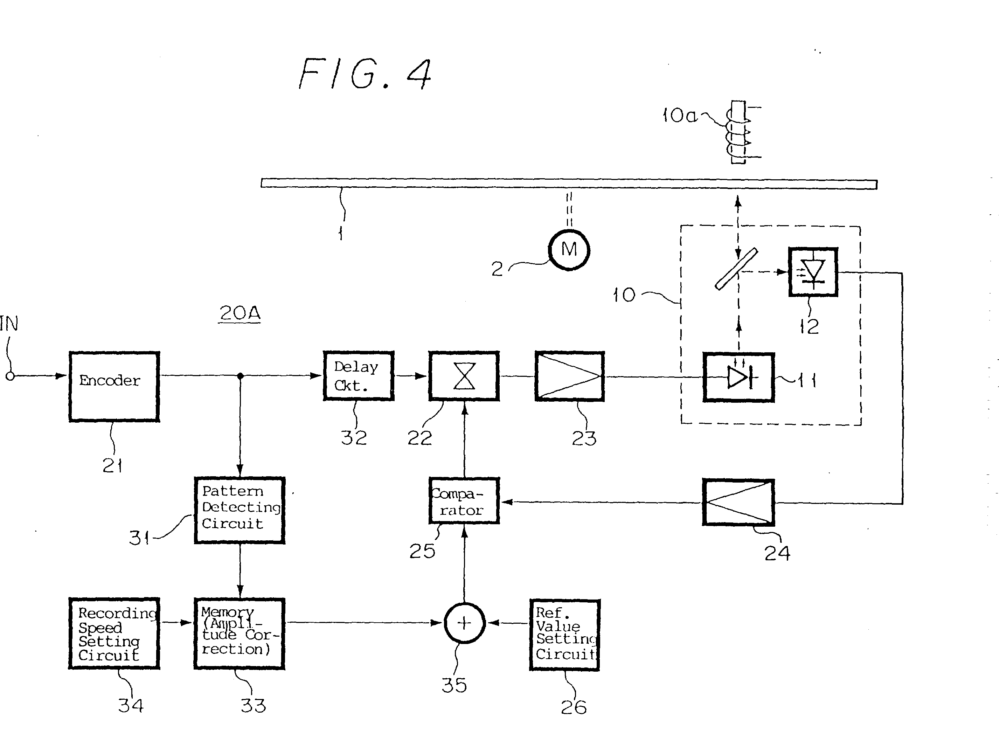

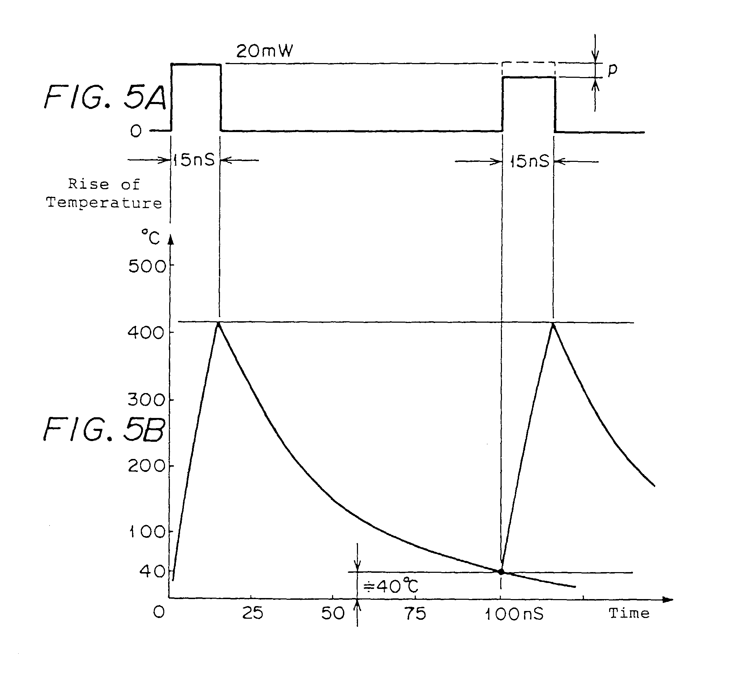

An embodiment of an optical recording apparatus according to the present invention will be explained hereinafter with reference to Figs. 4 and 5.

The construction of an embodiment of the present invention is shown in Fig. 4. In Fig. 4, elements corresponding to those of Fig. 1 are represented by the same reference numerals and the explanations thereof will be omitted.

In the embodiment of Fig. 4, reference numeral 20A denotes a recording circuit system having a pattern detecting circuit 31 for detecting a pulse pattern of a recording signal. In the recording circuit system, an output signal from an encoder 21 is supplied to the pattern detecting circuit 31 and also supplied to a modulation circuit 22 through a delay circuit 32 for compensating a signal processing time. Reference numeral 33 denotes a memory for correcting an amplitude to which an output of the pattern detecting circuit 31 and an output of a recording speed setting circuit 34 are supplied. A correction value from the memory 33 and a reference value from a reference value setting circuit 26 are added to each other in an adder 35 which in turn supplies an added value to a comparator 25. The rest of the construction is the same as that of the example of Fig. 1.

The embodiment of Fig. 4 operates in a manner described below.

When it is detected that an interval of a pulse pattern of the recording signal is less than a predetermined value by the pattern detecting circuit 31, the correction value previously stored in the memory 33 for correcting the amplitude is read out. The correction value is of course required to be compensated in accordance with a rotation speed of a disc, so that the previously stored correction value of the memory is compensated in accordance with a rotation speed of a disc by the recording speed setting circuit 34 and then the compensated correction value is delivered from the memory 33.

An output level of a light intensity modulation circuit 22, that is, an intensity level of a radiation light from a laser diode 11 is controlled in accordance with the compensated correction value and the reference value from the reference value setting circuit 26, so that a power level of a succeeding laser light pulse is lowered by p mW as shown in Fig. 5A.

An example of power level value in case of decreasing it will be explained hereinafter.

When data is recorded on a magneto-optical disc by a laser light beam with a linear velocity of 10 m/S, recording frequency of 12.5 MHz, pulse interval of 80 ns, and pulse width of 15 ns, for example, a succeeding pulse signal can be recorded with compensating influence of the remaining heat of a preceding pulse signal if an amplitude of the succeeding pulse signal is set to be about 83% of that of the preceding pulse signal at a room temperature. In this case, an amplitude of a further succeeding pulse signal succeeding to the succeeding pulse signal may be set to about 81% of that of the above-mentioned preceding pulse signal.

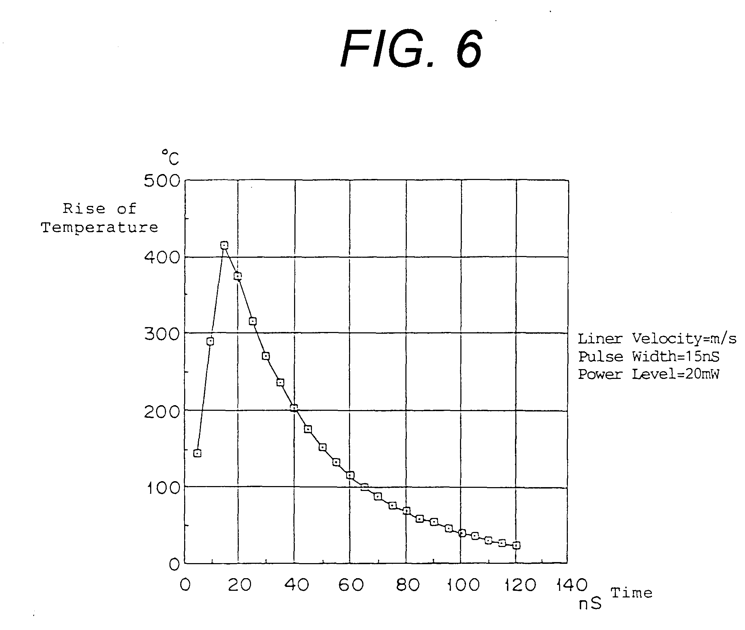

Now, a rate of decreasing an amplitude of a succeeding pulse signal relative to an amplitude of a normal pulse signal depends on a recording linear velocity, that is, a rotation speed of the magneto-optical disc and an atmospheric temperature where the recording is performed and also is required to be changed depending on a pulse interval between a preceding pulse signal and a succeeding pulse signal. A change of temperature of a recording medium of a magneto-optical disc will be shown by a graph of Fig. 6 wherein the abscissa and ordinate represent a time elapsed and temperature of the recording medium of the magnetic-optical disc, respectively, when a recording operation is performed with a power level of a recording light beam set to 20 mW under the above-described condition. As clear from Fig. 6, temperature of the recording medium decreases as time elapsed, so that the thermal influence of a succeeding pulse signal becomes less as an interval of the pulse signal becomes larger to thereby make an amount of correction of an amplitude of a succeeding pulse signal smaller. It is supposed from Fig. 6 that correction of an amplitude of a succeeding pulse is scarcely required when a pulse interval is increased to about 160 ns.

Numerical values described above are only one example and so a correction value of an amplitude of a succeeding pulse signal varies depending on the above-described conditions.

Thus, by correcting an amplitude of a succeeding pulse signal, the temperature increasing rate of the recording layer of the magneto-optical disc 1 due to a succeeding laser light pulse becomes slightly gentle, so that a temperature of the recording layer at a time point of termination of radiation of a succeeding laser light pulse increases merely to the same level as that at a time point of termination of radiation of a preceding laser light pulse, thereby cancelling the influence of the remaining heat of the recording medium due to the preceding laser light pulse to make it possible to record a high-density pulse signal accurately.

Explanations of the embodiment have been made of a case of using a magneto-optical disc as an example of optical discs but the present invention can be applied to any types of optical discs which are capable of recording data thereon. For example, the present invention can be applied to a recording apparatus which mounts an optical disc such as a rewriteable type optical disc of a phase change type using a chalcogenide thin film or a write-once type optical disc using tellurium oxide etc. or the like.

As described above in detail, according to the present invention, if it is determined by detecting a pulse pattern of a recording signal that a pulse interval is equal to or less than a predetermined value, an amplitude of a succeeding pulse signal is decreased to thereby decrease a radiation energy of a laser light pulse, so that there can be provided with an optical recording apparatus which can cancel the influence of the remaining heat of the recording medium due to a preceding laser light pulse to make it possible to record a high-density pulse signal accurately.

## Claims

1. An optical recording apparatus wherein a modulation signal based on recording data is supplied to light intensity modulating means of a laser light source and a light beam from the laser light source is radiated on an optical recording medium to record data thereon, comprising
pattern detecting means (31) for detecting a pulse pattern of the modulation signal based on the recording data, and
control means (25) for compensating influence of the remaining heat of the optical recording medium (1) caused by the preceding signal pulse. when said pattern detecting means (31) detects that an interval between the preceding signal pulse and the succeeding signal pulse becomes smaller than a predetermined interval **characterized in that** said control means decreases the amplitude of a succeeding signal pulse by a constant stored correction value to lower the amplitude of a normal signal pulse normally to be applied to the laser light source (11) by a sufficient value for achieving said compensation.

2. An optical recording apparatus according to claim 1, **characterized in that** said control means (25) includes recording speed setting means (34) and controls an amplitude of the succeeding signal pulse to decrease it in accordance with a recording speed set by said recording speed setting means.

## Revendications

1. Appareil d'enregistrement optique dans lequel un signal de modulation basé sur des données d'enregistrement est délivré à un moyen de modulation d'intensité de lumière d'une source de lumière laser et dans lequel le faisceau lumineux de la source de lumière laser est projeté sur un support d'enregistrement optique pour y enregistrer des données, comprenant :
un moyen de détection de forme (31) pour détecter une forme d'impulsion du signal de modulation basé sur les données d'enregistrement ; et
un moyen de commande (25) pour compenser l'influence de la chaleur rémanente du support d'enregistrement optique (1) provoquée par l'impulsion de signal précédente, lorsque ledit moyen de détection de forme (31) détecte qu'un intervalle entre l'impulsion de signal précédente et l'impulsion de signal suivante est plus petit qu'un intervalle prédéterminé, caractérisé en ce que ledit moyen de commande diminue l'amplitude d'une impulsion de signal suivante d'une valeur de correction constante mémorisée pour diminuer, d'une valeur suffisante pour obtenir ladite compensation, l'amplitude d'une impulsion de signal normale à appliquer normalement à la source de lumière laser (11).

2. Appareil d'enregistrement optique selon la revendication 1, caractérisé en ce que ledit moyen de commande (25) comprend un moyen de fixation de vitesse d'enregistrement (34) et commande l'amplitude d'une impulsion de signal suivant pour la diminuer en fonction de la vitesse d'enregistrement fixée par ledit moyen de fixation de vitesse d'enregistrement.

## Patentansprüche

1. Optisches Aufzeichnungsgerät, bei dem ein auf Aufzeichnungsdaten basierendes Modulationssignal an einen Lichtintensitätsmodulator einer Laserlichtquelle angelegt wird und ein Laserlichtstrahl der Laserlichtquelle auf einen optischen Aufzeichnungsträger abgestrahlt wird, um darauf Daten aufzuzeichnen, mit:
einem Mustererkenner (31), der ein Pulsmuster des Modulationssignals basierend auf den Aufzeichnungsdaten erkennt, und
einem Regler (25) zur Kompensation des Einflusses der durch den vorhergehenden Signalpuls erzeugten verbleibenden Wärme des optischen Aufzeichnungsträgers (1), wenn der Mustererkenner (31) feststellt, daß ein Intervall zwischen dem vorhergehenden Signalpuls und dem nachfolgenden Signalpuls kleiner als ein bestimmtes Intervall wird, **dadurch gekennzeichnet,** daß der Regler die Amplitude des nachfolgenden Signalpulses um einen konstanten gespeicherten Wert verringert, damit ein normaler Signalpuls, der normalerweise an die Laserlichtquelle (11) angelegt wird, zur Kompensation eine um einen genügenden Wert verringerte Amplitude aufweist.

2. Optisches Aufzeichnungsgerät nach Anspruch 1, **dadurch gekennzeichnet,** daß der Regler (25) einen Aufzeichnungsgeschwindigkeitssteller (34) enthält und eine Amplitude des nachfolgenden Signalpulses in Übereinstimmung mit einer von diesem gesetzten Aufzeichnungsgeschwindigkeit regelt.
